# EUROPÄISCHE PATENTSCHRIFT

(11) **EP 3 102 858 B1**
(45) Veröffentlichungstag und Bekanntmachung des Hinweises auf die Patenterteilung: **05.04.2023**
(21) Anmeldenummer: 15715979.9
(22) Anmeldetag: 06.02.2015
(51) Int. Cl.: F16K 3/20

(54) **SCHIEBERVENTIL**
SPOOL VALVE
SOUPAPE À TIROIR

(30) Priorität: 07.02.2014 DE 102014001726
(43) Veröffentlichungstag der Anmeldung: 14.12.2016
(60) Teilanmeldung: 23150214.7
(73) Patentinhaber: Kramer, Walter, 6333 Hünenberg See (CH)
(72) Erfinder: Kramer, Walter, 6333 Hünenberg See (CH)
(74) Vertreter: Jackisch-Kohl, Anna-Katharina
(86) Internationale Anmeldenummer: PCT/EP2015/000241
(87) Internationale Veröffentlichungsnummer: WO 2015/124266

(56) Entgegenhaltungen:
- CN-U- 202 674 352
- GB-A- 1 572 389
- US-A- 3 367 625

## Beschreibung

Die Erfindung betrifft eine Einrichtung mit wenigstens einer pneumatischen Förderleitung und einem Schieberventil nach dem Oberbegriff des Anspruches 1.

Es ist bekannt, mit Schieberventilen Förderleitungen, durch die ein Gut, wie etwa Kunststoffgranulat, pneumatisch gefördert wird, freizugeben oder zu schließen. Hierfür ist ein Schieber vorgesehen, der aus einer Schließstellung in eine Freigabestellung verschoben wird, in der eine im Schieber vorgesehene Durchlassöffnung den Durchtritt des Fördergutes durch die Förderleitung ermöglicht. Das Fördergut wird mittels Vakuum oder mittels Druck durch die Förderleitung gefördert. Darum muss der Durchtrittsbereich des Schiebers durch die Förderleitung abgedichtet sein. Es ist bekannt, am Rand der Durchlassöffnung eine Dichtung vorzusehen, die in der Freigabestellung des Schiebers den Dichtspalt zwischen dem Schieber und der Förderleitung abdichtet. Hierzu wird die Dichtung mittels eines Druckmediums gegen den Schieber gedrückt (GB 1 572 389 A, US 3 367 625 A, CN-U-202674352).

Der Erfindung liegt die Aufgabe zugrunde, die gattungsgemäße Einrichtung so auszubilden, dass das Schieberventil bei einer einfachen konstruktiven und kostengünstigen Gestaltung eine sichere Abdichtung gewährleistet, dabei der Schieber während Förderpausen, also im drucklosen Zustand, aber leicht zwischen der Schließ- und der Freigabestellung verschoben werden kann.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung weist der Dichtring L-förmigen Querschnitt auf. Eine solche Ausbildung des Dichtringes wird insbesondere dann eingesetzt, wenn das Fördergut in der Förderleitung mittels Druck gefördert wird. Der eine Schenkel dieses Dichtringes bildet den flachen, ringscheibenförmigen Dichtteil, der flächig am Schieber anliegt.

Der andere Schenkel des L-förmigen Querschnitt aufweisenden Dichtringes verläuft zylindrisch, wobei die Zylinderachse mit der Achse der Rohrstücke zusammenfällt. Dieser zylindrische Schenkel liegt mit seiner äußeren Mantelfläche an der Innenseite eines den Dichtring umgebenden Stützringes an. Dadurch wird der Dichtring durch den Stützring radial nach außen einwandfrei abgestützt.

Der eine, flache Schenkel des Dichtringes hat radialen Abstand vom Rohrstück. Dann kann der Druck, der bei einer Druckförderung in der Förderleitung herrscht, über den Ringspalt zwischen dem Rohrstück und dem Schieber in den Bereich zwischen dem Rohrstück und dem zylindrischen Teil des Dichtringes gelangen. Unter diesem Druck wird dieser zylindrische Dichtringteil fest gegen die Innenseite des Stützringes gedrückt, wodurch eine optimale Abdichtung gewährleistet ist.

Der Dichtring weist einen das Rohrstück umgebenden Aufnahmeraum für ein Druckmedium auf. Die beiden Schenkel des Dichtringes werden dadurch gegen den Schieber sowie den Stützring gedrückt, so dass eine zuverlässige Abdichtung der Förderleitung bzw. deren Rohrstücke im Bereich des Schiebers erreicht wird.

Dieser Druckraum wird in Achsrichtung der Rohrstücke durch den einen flachen Schenkel des Dichtringes bzw. durch den Schieber und die Halteplatte und in Radialrichtung durch das Rohrstück und den Stützring bzw. den anderen, zylindrischen Schenkel des Dichtringes begrenzt.

Das Schieberventil hat bei einer bevorzugten Ausführungsform zwei Halteplatten, zwischen denen der Schieber angeordnet ist. Die Halteplatten haben hierbei jeweils Abstand vom Schieber, so dass sie die Verschiebbarkeit des Schiebers nicht beeinträchtigen können.

Bei einer bevorzugten Ausbildung liegt an beiden Seiten des flachen Schiebers jeweils ein Dichtring mit einem ringscheibenförmigen Dichtteil an. Diese flachen Dichtteile liegen jeweils unter Druckkraft flächig an den beiden Schieberseiten an. Dadurch ist eine optimale Abdichtung gewährleistet.

Die beiden Halteplatten werden vorteilhaft durch Abstandhalter auf Abstand zueinander gehalten. Diese Abstandhalter sind so ausgebildet, dass sie in Verschieberichtung des Schiebers sich erstreckende Schlitze im Schieber durchsetzen. Die Abstandhalter dienen somit zusätzlich auch zur Führung des Schiebers in seiner Verschieberichtung.

Vorteilhaft weist zumindest die eine Halteplatte wenigstens ein Rohrstück auf. Bevorzugt sind beide Halteplatten mit jeweils mindestens einem Rohrstück versehen. Die Rohrstücke sind Teil der Förderleitung. Die Rohrstücke sind fest mit der jeweiligen Halteplatte verbunden, vorzugsweise mit ihr verschweißt, und ragen durch eine Öffnung der Halteplatte. Der Schieber verläuft zwischen den einander zugewandten Enden der Rohrstücke der beiden Halteplatten, wobei der Dichtring den Ringspalt zwischen dem jeweiligen Rohrstück und dem Schieber abdichtet.

Bei einer vorteilhaften Ausführungsform ist der Dichtring durch wenigstens einen Positionierring in seiner Einbaulage gehalten.

Vorteilhaft hat der Positionierring kreisförmigen Querschnitt. Er liegt dadurch nur linienförmig auf dem flachen Dichtteil des Dichtringes auf, so dass der Schieber leicht zwischen der Freigabe- und der Schließstellung verschoben werden kann.

Der Stützring erstreckt sich zwischen dem Schieber und der benachbarten Halteplatte. Durch den zylindrischen Schenkel des Dichtringes wird verhindert, dass der im Aufnahmeraum herrschende Druck über die Spalte zwischen dem Stützring und dem Schieber bzw. der Halteplatte abgebaut werden kann.

Bei der Druckförderung reicht der im Aufnahmeraum herrschende Druck aus, die Förderleitung bzw. deren Rohrstücke zuverlässig abzudichten. Der Förderdruck wirkt über die Spalte zwischen den Rohrstücken und dem Schieber im Aufnahmeraum.

Vorteilhaft ist es, wenn im Aufnahmeraum der Dichtringe ein Positionierring untergebracht ist, der ein Abheben der Dichtringe vom Schieber im drucklosen Zustand verhindert.

Damit der Druck auch an den zylindrischen Schenkel des Dichtringes gelangen kann, ist der Positionierring für das Druckmedium durchlässig ausgebildet. Der Positionierring weist vorteilhaft wenigstens einen Durchlass für das Druckmedium auf, über den der Druck auch an diesen zylindrischen Schenkel gelangen kann. Vorteilhaft ist der Positionierring mit mehreren, über den Umfang des Positionierringes vorzugsweise gleichmäßig verteilt angeordneten Ringnuten versehen, über die der Druck auf den zylindrischen Schenkel des Dichtringes wirken kann.

Das Schieberventil kann so ausgebildet sein, dass mit einer Zuführleitung das Fördergut wahlweise in wenigstens zwei voneinander getrennte Förderleitungen geleitet werden kann. In diesem Fall ist die eine Halteplatte mit wenigstens zwei, in Verschieberichtung des Schiebers mit Abstand hintereinander liegenden Rohrstücken versehen, die Teile zweier getrennter Förderleitungen sind. Der Schieber ist mit einem Rohrstück versehen, an das die Zuleitung des Fördergutes angeschlossen ist. Durch Verschieben des Schiebers kann dessen Rohrstück wahlweise mit einem der Rohrstücke der Halteplatte verbunden werden. Das andere Rohrstück wird durch den Schieber verschlossen, so dass das zu fördernde Gut nur über die miteinander verbundenen Rohrstücke gefördert werden kann.

Eine solche Ausbildung ermöglicht es auch, über das mit dem Schieber verbundene Rohrstück das Fördergut einem Empfänger zuzuführen. Das Fördergut wird in diesem Fall über eines der Rohrstücke der Halteplatte zugeführt.

Bei einer vorteilhaften und einfachen Ausführungsform ist der Schieber zwischen den beiden Halteplatten schwenkbar gelagert. Eine solche Ausbildung führt zu einer sehr kompakten Bauform des Schieberventils.

Hierbei ist der Schieber vorteilhaft etwa L-förmig ausgebildet.

Bevorzugt ist der Schieber mit seinem längeren Schenkel schwenkbar zwischen den beiden Halteplatten gelagert.

Damit der Schieber einfach verschwenkt werden kann, ist er mit mindestens einem Betätigungsteil versehen. Mit ihm kann der Benutzer des Schieberventils den Schieber in die Freigabe- sowie in die Schließstellung sehr einfach verschwenken.

Da sich der Schieber zwischen den beiden Halteplatten befindet, ist zumindest in der einen Halteplatte ein Schlitz vorgesehen, durch den das Betätigungsteil ragt. Dadurch lässt sich der Schieber vom Benutzer einfach von außen verstellen. Der Schlitz ist um die Schwenkachse des Schiebers gekrümmt.

Vorteilhaft ist der Schlitz so lang, dass durch die beiden in Verschwenkrichtung liegenden Enden des Schlitzes die Freigabestellung sowie die Schließstellung des Schiebers bestimmt werden. Der Benutzer muss darum das Betätigungsteil nur so weit bewegen, bis es an dem einen oder anderen Ende des Schlitzes zur Anlage kommt.

Damit der Schieber in der Freigabe- bzw. in der Schließstellung zuverlässig lagegesichert ist, ist vorteilhaft vorgesehen, das Betätigungsteil mit einem Klemmelement, vorzugsweise einem Drehgriff, zu versehen.

Der Drehgriff ist bei einer vorteilhaften Ausführungsform fest mit einem Gewindebolzen versehen, der in eine fest mit dem Schieber verbundene Gewindebuchse geschraubt werden kann. In der Sicherungsstellung ist der Gewindebolzen so weit in die Gewindebuchse geschraubt, dass das Klemmelement klemmend an der Halteplatte anliegt.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsformen näher erläutert.

Es zeigen
- Fig. 1: ein Schieberventil einer nicht erfindungsgemäßen Einrichtung in Draufsicht,
- Fig. 2: einen Schnitt längs der Linie A-A in Fig. 1,
- Fig. 3: in vergrößerter Darstellung die Einzelheit X in Fig. 2,
- Fig. 4: in einer Darstellung entsprechend Fig. 1 das Schieberventil, dessen Schieber in eine andere Endstellung verschoben ist,
- Fig. 5: einen Schnitt längs der Linie A-A in Fig. 4,
- Fig. 6: eine Draufsicht auf ein Schieberventil einer erfindungsgemäßen Einrichtung,
- Fig. 7: einen Schnitt längs der Linie A-A in Fig. 6,
- Fig. 8: das Schieberventil gemäß Fig. 6, dessen Schieber in eine andere Endstellung verschoben ist,
- Fig. 9: einen Schnitt längs der Linie A-A in Fig. 8,
- Fig. 10: die Einzelheit X in Fig. 9 in vergrößerter Darstellung,
- Fig. 11: eine Draufsicht auf eine zweite Ausführungsform eines Schieberventils einer erfindungsgemäßen Einrichtung,
- Fig. 12: einen Schnitt längs der Linie A-A in Fig. 11,
- Fig. 13: eine Ansicht in Richtung des Pfeiles XIII in Fig. 11,
- Fig. 14: das Schieberventil gemäß Fig. 11 in perspektivischer Darstellung,
- Fig. 15: eine Ansicht in Richtung des Pfeiles XV in Fig. 11,
- Fig. 16: eine weitere Ausführungsform eines Schieberventils einer erfindungsgemäßen Einrichtung in Ansicht, dessen Schieber eine Schließstellung einnimmt,
- Fig. 17: das Schieberventil gemäß Fig. 16, dessen Schieber die Freigabestellung einnimmt,
- Fig. 18: einen Schnitt längs der Linie A-A in Fig. 17.

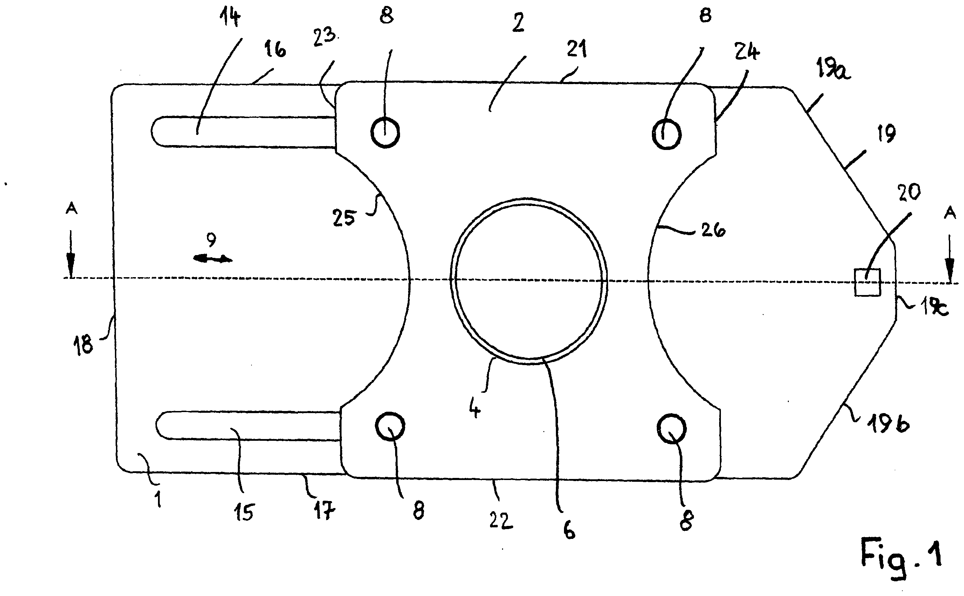

Das Schieberventil gemäß den Fig. 1 bis 5 wird bei einer Vakuumförderung eingesetzt. Es hat einen flachen Schieber 1, der zwischen zwei Halteplatten 2, 3 liegt. Sie liegen jeweils mit Abstand zum Schieber 1 und weisen jeweils eine Öffnung 4, 5 auf, durch welche jeweils ein Rohrstück 6, 7 ragt. Die beiden Rohrstücke 6, 7 liegen fluchtend zueinander und haben gleichen Innen- und Außendurchmesser. An die Rohrstücke 6, 7 sind in bekannter Weise Förderleitungen angeschlossen, durch die ein Fördergut, wie ein Kunststoffgranulat, gefördert wird. Mit dem Schieber 1 kann der Innenquerschnitt der Rohrstücke 6, 7 geschlossen werden, so dass durch die entsprechenden Förderleitungen kein Gut mehr strömen kann. Die Rohrstücke 6, 7 sind vorteilhaft durch Schweißen mit den Halteplatten 2, 3 fest verbunden.

Die beiden Halteplatten 2, 3 sind durch Abstandhalter 8 auf den notwendigen Abstand zueinander gehalten. Im Ausführungsbeispiel sind vier Abstandhalter 8 vorgesehen, von denen jeweils zwei Abstandhalter in Verschieberichtung 9 des Schiebers 1 mit Abstand hintereinander liegen.

Die Abstandhalter 8 sind gleich ausgebildet und haben jeweils eine Schraube 10, mit der der Abstand zwischen den beiden Halteplatten 2, 3 eingestellt werden kann. Dadurch können beispielsweise Fabrikationstoleranzen einfach ausgeglichen werden, ohne dass eine mechanische Bearbeitung der entsprechenden Teile erforderlich ist. Die Halteplatte 3 ist durch eine Kontermutter 11, die auf der Schraube 10 sitzt, gesichert. Die Schraube 10 ist über einen Teil ihrer Länge von einer Führungsbuchse 12 umgeben, die auf der Schraube 10 durch eine weitere Kontermutter 13 axial auf der Schraube 10 gesichert ist. Mit ihrem anderen Ende liegt die Führungsbuchse 12 an der der Halteplatte 3 zugewandten Innenseite der Halteplatte 2 an. Die Führungsbuchsen 12 jedes Abstandhalters 8 ragen durch einen in Verschieberichtung 9 des Schiebers 1 verlaufenden Schlitz 14, 15. Der Schieber 1 hat etwa rechteckförmigen Umriss mit parallel zueinander und zur Verschieberichtung 9 sich erstreckenden Längsseiten 16, 17 und Schmalseiten 18, 19. Die Schmalseite 18 liegt senkrecht zu den Längsseiten 16, 17 und verläuft gerade. Die gegenüberliegende Schmalseite 19 hat von den Längsseiten 18, 17 aus konvergierend zueinander verlaufende Randabschnitte 19a, 19b, die durch einen geraden, parallel zur Schmalseite 18 sich erstreckenden kurzen Randabschnitt 19c ineinander übergehen. Aufgrund dieser Gestaltung verjüngt sich der Schieber 1 an diesem Ende, an dem sich wenigstens eine Einhängeöffnung 20 befindet, in die ein Betätigungselement für den Schieber 1 befestigt, beispielsweise eingehängt werden kann. Die beiden Schlitze 14, 15 liegen nur mit geringem Abstand neben den Längsseiten 16, 17 des Schiebers 1. In die beiden Schlitze 14, 15 ragen jeweils zwei Führungsbuchsen 12, die in Verschieberichtung 9 mit Abstand hintereinander liegen.

Wie Fig. 1 zeigt, haben die beiden Halteplatten 2, 3 ebenfalls zwei gerade verlaufende Längsseiten 21, 22, die in Draufsicht auf das Schieberventil geringfügig über die Längsseiten 16, 17 des Schiebers 1 vorstehen. In den die Längsseiten 21, 22 verbindenden Rändern 23, 24 befindet sich in halber Länge jeweils eine teilkreisförmige Vertiefung 25, 26. Die Rohrstücke 6, 7 liegen mittig zu den Halteplatten 2, 3.

Die beschriebene Umrissform des Schiebers 1 und der Halteplatten 2, 3 ist nicht beschränkend zu verstehen. Der Schieber 1 und die Halteplatten 2, 3 können selbstverständlich jede andere geeignete Umrissform haben.

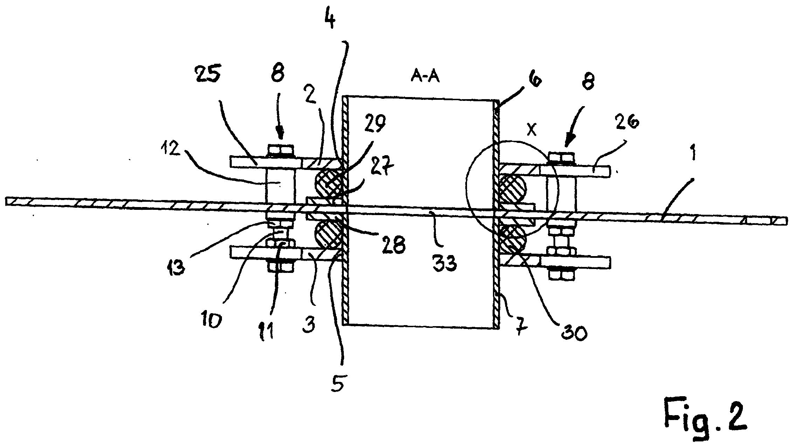

Die Rohrstücke 6, 7 sind jeweils von einem flachen Dichtring 27, 28 umgeben, die am Umfang der Rohrstücke 6, 7 dichtend anliegen und auf beiden Seiten des Schiebers 1 aufliegen (Fig. 2). Die Dichtringe 27, 28 haben gleiche Außendurchmesser und bestehen aus für den jeweiligen Anwendungsfall geeignetem Material, z.B. aus Silikon, Polytetraflurethylen und dergleichen. Diese Dichtringe können temperaturbeständig, säurebeständig, beständig gegen aggressive Dämpfe und dergleichen sein. Das Material der Dichtringe wird in Abhängigkeit von dem zu fördernden Gut und/oder den Umgebungsbedingungen des Schieberventiles gewählt. Die Dichtringe 27, 28 liegen über den Umfang und ihre radiale Breite flächig auf den beiden Seiten des Schiebers 1 auf.

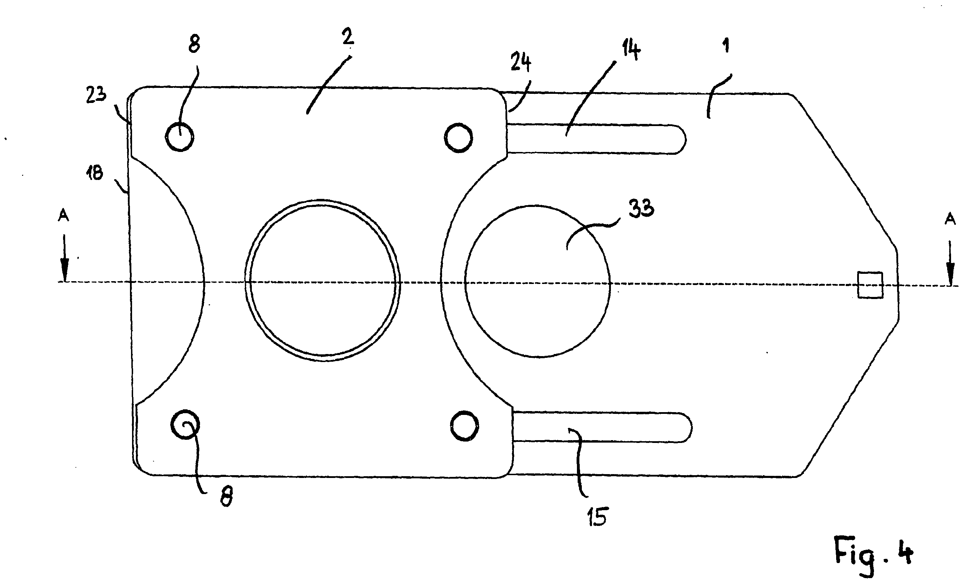

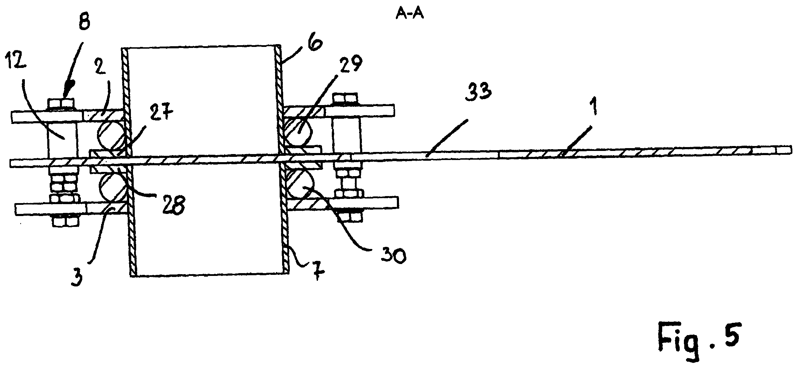

Zwischen den Dichtringen 27, 28 und den beiden Halteplatten 2, 3 ist jeweils ein Positionierring 29, 30 angeordnet. Sie haben kreisförmigen Querschnitt und bestehen aus luftdurchlässigem Material, aus elastomerem Material, wie Gummi, gummiähnlichen Werkstoffen, aus EPDM und dergleichen. Die beiden Positionierringe 29, 30 liegen am Umfang der Rohrstücke 6, 7 an und sorgen dafür, dass die Dichtringe 27, 28 nicht vom Schieber 1 abheben. Die Dichtringe 27, 28 liegen lose auf dem Schieber 1 auf. Dadurch wird sichergestellt, dass der Schieber 1 leicht zwischen der Freigabestellung (Fig. 1 bis 3) und der Schließstellung (Fig. 4 und 5) verschoben werden kann.

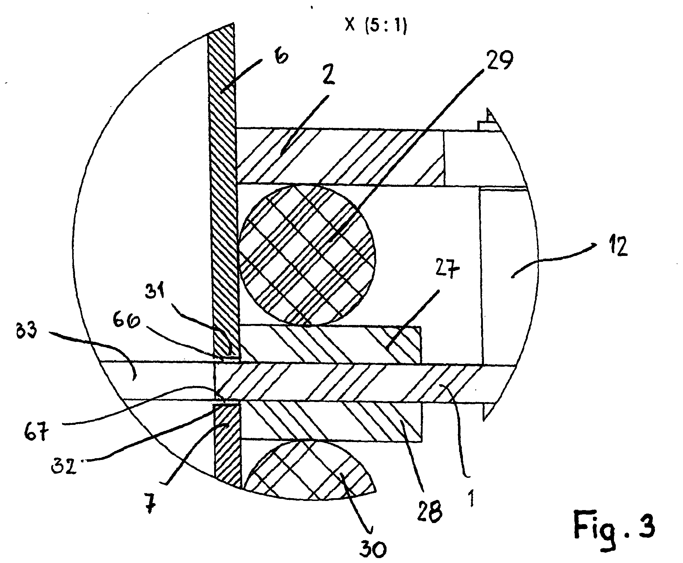

Der Schieber 1 erstreckt sich zwischen den beiden Rohrstücken 6, 7, deren einander zugewandte Stirnseiten 31, 32 mit den beiden Seiten des Schiebers 1 jeweils einen Ringspalt 66, 67 (Fig. 3) bilden. Er ist in Fig. 3 vergrößert dargestellt. Die Dichtringe 27, 28 dichten die Spalte 66, 67 zwischen den Rohrstücken 6, 7 und dem Schieber 1 ab, der wegen der Ringspalte 66, 67 berührungslos verschiebbar ist.

Bei der Vakkumförderung des Fördergutes wird die auf die scheibenförmigen Dichtringe 27, 28 wirkende Kraft durch die Druckdifferenz zwischen dem Druck in den Rohrstücken 6, 7 und dem Umgebungsdruck bestimmt. Je größer diese Druckdifferenz ist, desto größer ist die auf die Dichtringe 27, 28 wirkende Kraft. Dadurch wird gewährleistet, dass keine Umgebungsluft über den Spalt zwischen dem Schieber 1 und den Rohrstücken 6, 7 in die Rohrstücke 6, 7 gelangen kann.

Die Positionierringe 29, 30 sind so ausgebildet, dass die Druckdifferenz auf die Dichtringe 27, 28 wirken kann. Mit den Halteplatten 2, 3 und den Abstandshaltern 8 lässt sich der Spalt 66, 67 zwischen dem Schieber 1 und den Rohrstücken 6, 7 feinfühlig und genau einstellen.

Wenn es die Fertigungstoleranzen zulassen, dass die Spalte 66, 67 zwischen den Rohrstücken 6, 7 und dem Schieber 1 ausreichend klein sind, ist eine Verstelleinrichtung, wie sie im Ausführungsbeispiel vorgesehen ist, nicht notwendig. Die Positionierringe 29, 30 stellen sicher, dass die Dichtringe 27, 28 sich im drucklosen Zustand nicht vom Schieber 1 entfernen. Wäre dies der Fall, würde bei der Vakuumförderung die Selbstanziehung der Dichtringe 27, 28 nach dem Prinzip einer Rückschlagklappe nicht mehr gewährleistet, da die geringe Luftmenge, die durch die Spalte 66, 67 zwischen den Rohrstücken 6, 7 und dem Schieber 1 hindurchtreten kann, so gering ist, dass die Dichtringe 27, 28 aufgrund der beschriebenen Druckdifferenz nicht mehr angezogen würden.

Die Positionierringe 29, 30 können beispielhaft aus luftdurchlässigem Material bestehen, beispielsweise aus offenporigem Schaummaterial.

In der in den Fig. 1 bis 3 dargestellten Freigabestellung ist der Öffnungsquerschnitt der Rohrstücke 6, 7 durch den Schieber 1 freigegeben, der eine Durchlassöffnung 33 aufweist, deren Durchmesser gleich dem Innendurchmesser der beiden Rohrstücke 6, 7 ist. In dieser Offenstellung des Schiebers 1 liegen die in Fig. 1 rechten Abstandhalter 8 mit ihren Führungsbuchsen 12 am benachbarten Ende der Schlitze 14, 15 des Schiebers 1 an.

Soll der Durchlass durch die Rohrstücke 6, 7 geschlossen werden, wird der Schieber 1 in Verschieberichtung 9 nach rechts verschoben. In der Schließstellung des Schiebers 1 liegen die Führungsbuchsen 12 der in Fig. 1 linken beiden Abstandhalter 8 vorteilhaft an dem in Fig. 1 linken Ende der Schlitze 14, 15 an. Der Schieber 1 lässt sich leicht verschieben, weil die Positionierringe 29, 30 keinen oder allenfalls nur einen minimalen Druck auf die im Querschnitt rechteckigen Dichtringe 27, 28 ausüben, so dass die Anpresskraft auf den Schieber 1 gering ist. Durch den auf die Dichtringe 27, 28 wirkenden Außendruck wird eine einwandfreie Abdichtung zwischen den Rohrstücken 6, 7 und dem Schieber 1 gewährleistet.

Die Halteplatten 2, 3 sind in Verschieberichtung 9 des Schiebers 1 kürzer als der Schieber 1, der in beiden Endstellungen (Fig. 1 u. 4) zumindest über einen Rand 23, 24 der Halteplatten 2, 3 vorsteht. In der Freigabestellung gemäß Fig. 1 ragt der Schieber 1 über beide Ränder 23, 24 der Halteplatten 2, 3 vor, die in Draufsicht deckungsgleich übereinander angeordnet sind. In der Schließstellung gemäß Fig. 4 liegt die Schmalseite 18 des Schiebers 1 etwa in Höhe des Randes 23 der Halteplatten 2, 3 während der Schieber 1 über den gegenüberliegenden Rand 24 der Halteplatten 2, 3 entsprechend weit in Verschieberichtung vorsteht. In der Schließstellung liegt die Durchlassöffnung 33 des Schiebers 1 im Bereich neben den Halteplatten 2, 3 (Fig. 4).

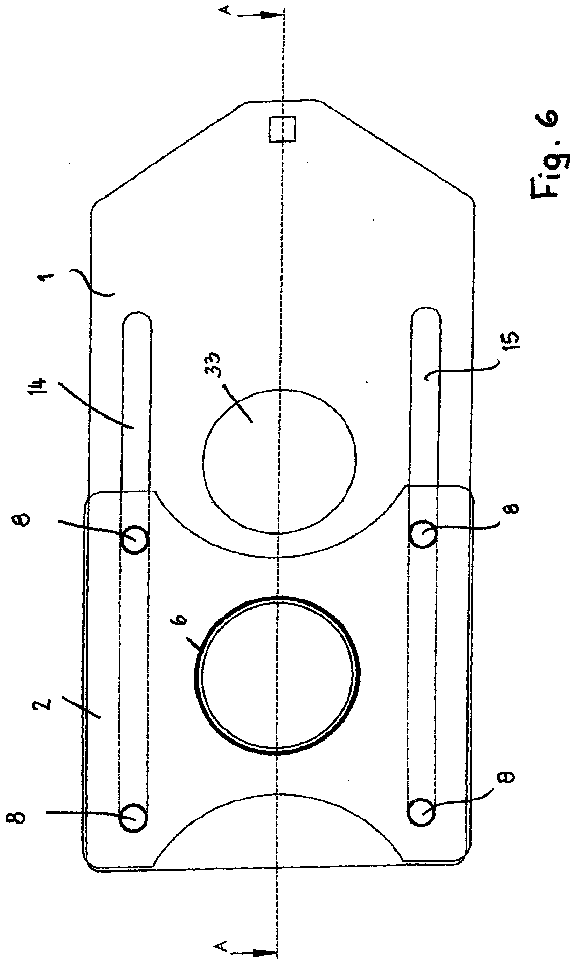

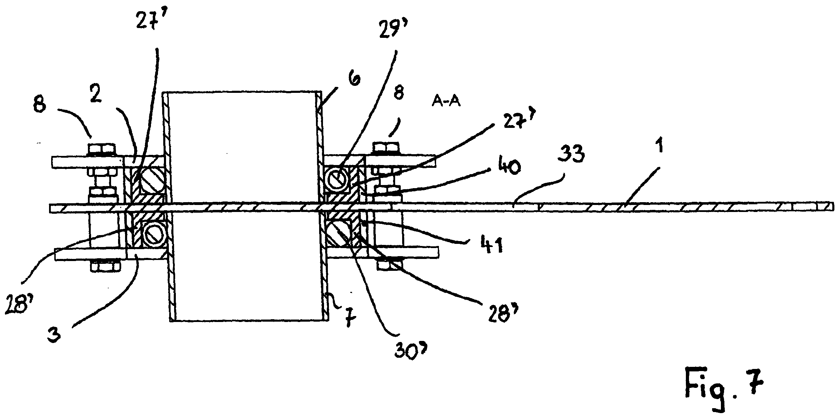

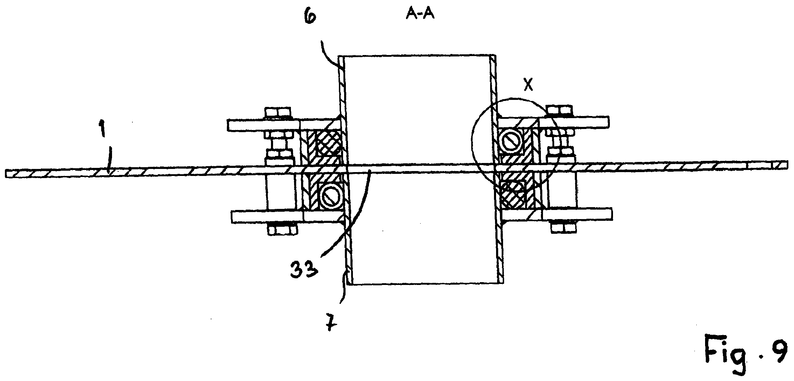

Das Schieberventil gemäß den Fig. 6 bis 10 wird bei einer Druckförderung des Gutes eingesetzt. Der Schieber 1 und die Halteplatten 2, 3 sowie deren Verbindung miteinander mittels der Abstandhalter 8 ist gleich ausgebildet wie bei der vorigen Ausführungsform.

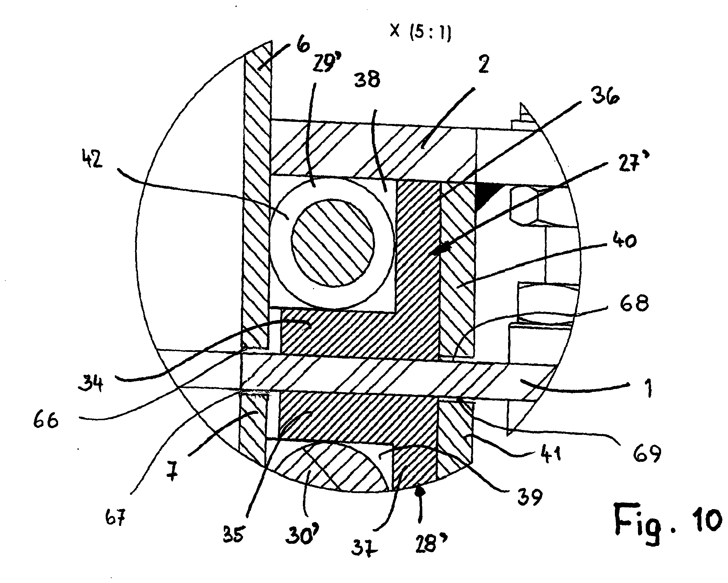

Die Dichtringe 27', 28' haben L-förmigen Querschnitt und umgeben die beiden Rohrstücke 6, 7 mit geringem radialem Abstand (Fig. 10). Mit ihrem einen Schenkel 34, 35 liegen die beiden Dichtringe 27', 28' dichtend auf den beiden Seiten des Schiebers 1 auf. Die beiden Schenkel 34, 35 sind ringscheibenförmig ausgebildet und schließen senkrecht an die Schenkel 36, 37 an, die die Rohrstücke 6, 7 mit Abstand umgeben und jeweils einen zylindrischen Ring bilden, dessen Achse mit der Achse der Rohrstücke 6, 7 zusammenfällt. Die Schenkel 34, 35; 36, 37 begrenzen jeweils einen ringförmigen Aufnahmeraum 38, 39, in dem die Positionierringe 29', 30' untergebracht sind.

Die beiden Dichtringe 27', 28' sind von jeweils einem Stützring 40, 41 umgeben, der sich zwischen den Halteplatten 2, 3 und dem Schieber 1 erstreckt und an dessen Innenseite die Schenkel 36, 37 der Dichtringe 27', 28' dichtend anliegen. Die Stützringe 40, 41 sind fest mit den Halteplatten 2, 3 verbunden, vorzugsweise an sie angeschweißt. Zwischen dem Schieber 1 und den Stützringen 40, 41 besteht jeweils ein Ringspalt 68, 69, so dass der Schieber auch im Bereich der Stützringe 40, 41 berührungslos verschoben werden kann.

Da die ringscheibenförmigen Schenkel 34, 35 die Rohrstücke 6, 7 mit radialem Abstand umgeben, wirkt bei der Druckförderung der in den Rohrstücken 6, 7 wirkende Druck über die Spalte 66, 67 zwischen den Rohrstücken 6, 7 und dem Schieber 1 auch in den Aufnahmeräumen 38, 39. Dies hat zur Folge, dass durch diesen Druck im Aufnahmeraum 38, 39 die ringscheibenförmigen Schenkel 34, 35 der Dichtringe 27', 28' gegen die beiden Seiten des Schiebers 1 gedrückt werden, wodurch eine zuverlässige Abdichtung zwischen den Schenkeln 34, 35 und dem Schieber erreicht wird. Aufgrund dieses Druckes in den Aufnahmeräumen 38, 39 sind die Positionierringe 29', 30' nicht zwingend notwendig. Die Positionierringe 29', 30' haben allerdings den Vorteil, dass auf die ringscheibenförmigen Schenkel 34, 35 der Dichtringe 27', 28' auch dann ein Druck wirkt, wenn in den Rohrstücken 6, 7 noch kein Druck aufgebaut ist. Dann sorgen die Positionierringe 29', 30' für den zur Abdichtung notwendigen Anpressdruck der Schenkel 34, 35 der Dichtringe 27', 28' am Schieber 1. Für diesen Fall sind die Positionierringe 29', 30' so ausgebildet, dass sie unter elastischer Verformung an den Schenkeln 34, 36; 35, 37 der Dichtringe 27', 28' anliegen.

Darüber hinaus hat die Verwendung der Positionierringe 29', 30' den Vorteil, dass auch bei Fertigungstoleranzen der Dichtringe 27', 28' und/oder der Stützringe 40, 41 eine einwandfreie Abdichtung gewährleistet ist.

Die Stützringe 40, 41 sind dichtfest mit den Halteplatten 2, 3 verbunden und bestehen aus metallischem Werkstoff, wie Stahl. Die Dichtringe 27', 28' bestehen aus dem gleichen Material wie die Dichtringe 27, 28 der vorigen Ausführungsformen.

Die Positionierringe 29', 30' sind mit wenigstens einer Ringnut 42 versehen (Fig. 10), durch die gewährleistet ist, dass der bei der Druckförderung entstehende Druck auf die Schenkel 36, 37 der beiden Positionierringe 29', 30' wirken kann. Vorteilhaft sind über den Umfang der im Querschnitt kreisförmigen Positionierringe 29', 30'mehrere solcher Ringnuten 42 vorhanden. Die Positionierringe 29', 30 können auch aus luftdurchlässigem Material bestehen, wie geschäumtes Material.

Wenn zur Druckförderung höhere Drücke eingesetzt werden, dann werden als Positionierringe 29', 30', sofern sie vorgesehen werden, vorteilhaft ringförmige Spiralfedern verwendet, die einen ausreichenden Druck auf die beiden Schenkel 34, 35; 36, 37 der Dichtringe 27', 28' ausüben.

Da in den Rohrstücken 6, 7 das Fördergut mittels Druck gefördert wird, der höher ist als der Umgebungsdruck, sind die Positionierringe 29', 30' nicht zwingend erforderlich. Je höher der Druck in den Rohrstücken 6, 7 ist, umso stärker werden die Dichtringe 27', 28' belastet. Dementsprechend drücken die Schenkel 34, 35 der Dichtringe 27', 28' auf die beiden Seiten des Schiebers 1, so dass keine Luft aus den Aufnahmeräumen 38, 39 entweichen kann. Die Positionierringe 29', 30' haben den Vorteil, dass die Dichtringe 27', 28' auch dann unter Dichtkraft stehen, wenn keine Förderung in den Rohrstücken 6, 7 stattfindet und dementsprechend in den Rohrstücken noch kein Druck aufgebaut ist.

In der Stellung gemäß Fig. 6 befindet sich der Schieber 1 in der Schließstellung, in der sich die Durchlassöffnung 33 im Bereich neben den beiden Halteplatten 2, 3 befindet. Der Durchlass durch die Rohrstücke 6, 7 ist somit geschlossen. Die in Fig. 6 linken Abstandhalter 8 liegen mit ihren Führungsbuchsen 12 an dem in Fig. 6 linken Ende der beiden Schlitze 14, 15 an.

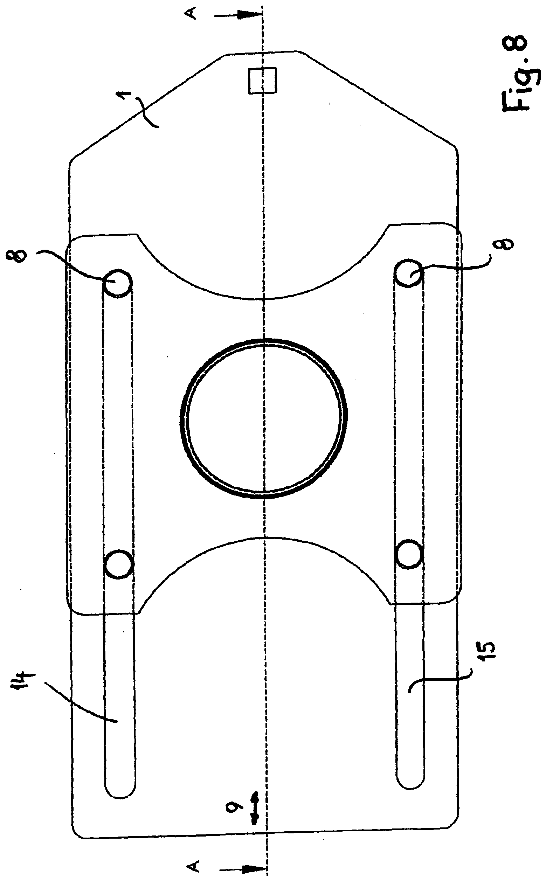

In Fig. 8 ist der Schieber 1 in Verschieberichtung 9 so weit nach links verschoben, dass die Durchlassöffnung 33 den Durchlass durch die Rohrstücke 6, 7 freigibt. Diese Freigabestellung wird vorteilhaft dadurch erreicht, dass die in Fig. 8 rechten Abstandhalter 8 am rechten Ende der Schlitze 14, 15 des Schiebers anliegen.

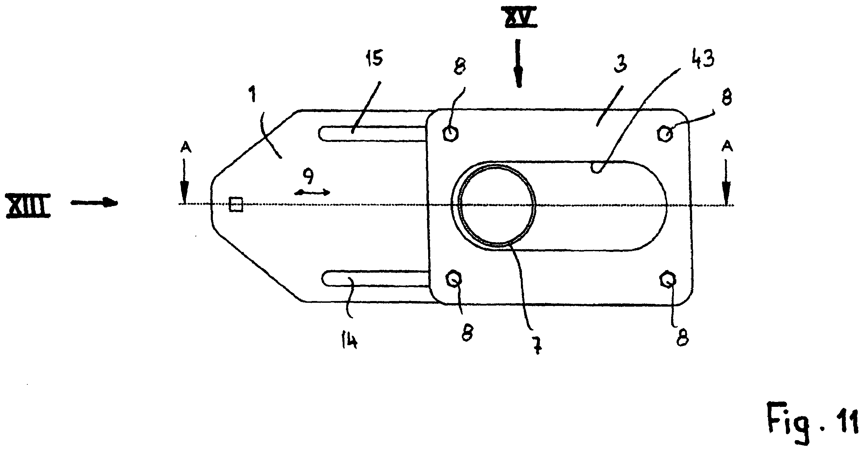

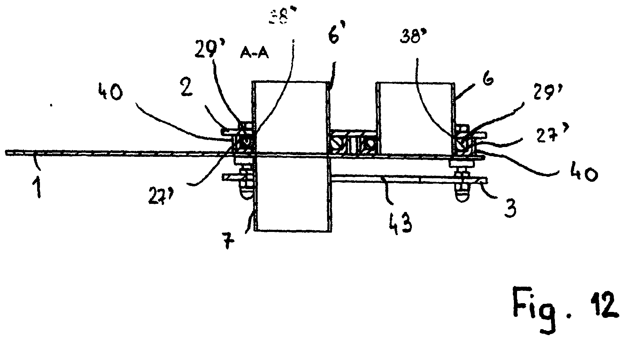

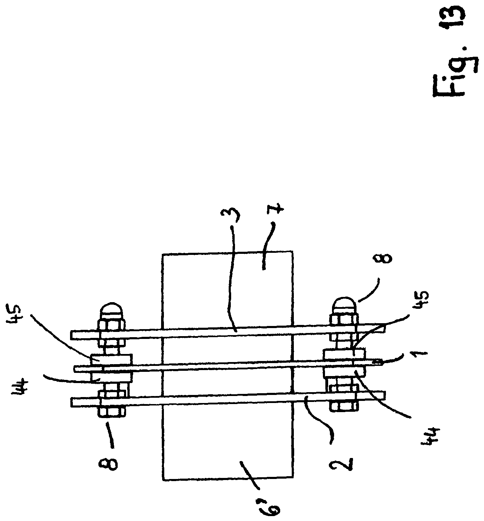

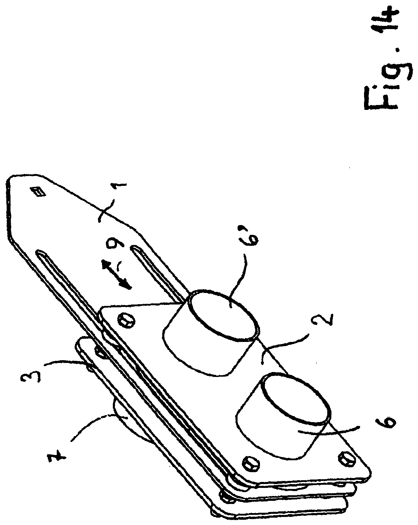

Die Figuren 11 bis 15 zeigen ein Schieberventil, dessen Halteplatte 2 mit zwei Rohrstücken 6, 6' versehen ist, die in Verschieberichtung 9 des Schiebers 1 mit Abstand hintereinander liegen. Die gegenüberliegende Halteplatte 3 weist in halber Breite eine längliche Öffnung 43 auf (Fig. 11), durch welche das Rohrstück 7 ragt, das fest mit dem Schieber 1 verbunden ist. Mit dem Schieber 1 lässt sich das Rohrstück 7 so verschieben, dass es entweder mit dem Rohrstück 6 oder mit dem Rohrstück 6' fluchtet. Dadurch besteht die Möglichkeit, dass zu fördernde Gut wahlweise durch das Rohrstück 6 oder das Rohrstück 6' und die daran jeweils angeschlossene Leitung zu fördern.

Die beiden Rohrstücke 6, 6' sind fest mit der Halteplatte 2 verbunden, vorzugsweise durch Schweißen. Beide Rohrstücke 6, 6' sind im Bereich zwischen der Halteplatte 2 und dem Schieber 1 entsprechend der vorigen Ausführungsform jeweils von einem Dichtring 27' und einem Positionierring 29' umgeben. Die Dichtringe 27' sind von den Stützringen 40 umgeben. Die Ausbildung und Anordnung dieser Ringe 27', 29', 40 entspricht vollständig der vorigen Ausführungsform.

Der Schieber 1 ist gleich ausgebildet wie beim Ausführungsbeispiel gemäß den Fig. 1 bis 5 und hat an seinen Längsseiten die beiden Schlitze 14, 15, durch welche die Abstandhalter 8 in der beschriebenen Weise ragen. Das Rohrstück 7, das fest, beispielsweise durch Schweißen, mit dem Schieber 1 verbunden ist, ragt durch die Öffnung 43 der Halteplatte 3 nach außen. Die an das Rohrstück 7 angeschlossene Förderleitung kann mit Hilfe des Schiebers 1 wahlweise mit der mit dem Rohrstück 6' oder mit der mit dem Rohrstück 6 verbundenen Förderleitung verbunden werden. Der Innenquerschnitt der Rohrstücke 6, 6', 7 ist gleich, so dass eine problemlose Förderung des jeweiligen Gutes durch die Rohrstücke gewährleistet ist.

Die Verbindung der Halteplatten 2, 3 miteinander und mit dem Schieber 1 ist gleich ausgebildet wie bei den vorigen Ausführungsbeispielen.

Bei den Darstellungen gemäß den Fig. 11 bis 15 ist der Schieber 1 so weit verschoben, dass die in Fig. 11 beiden rechten Abstandhalter 8 am rechten Rand der Schlitze 14, 15 anliegen. In dieser Stellung sind die Rohrstücke 6' und 7 miteinander verbunden, so dass das über die Förderleitung des Rohrstückes 7 zugeführte Gut in die an das Rohrstück 6' angeschlossene Leitung gefördert wird.

Soll das Gut an die an das Rohrstück 6 angeschlossene Leitung gefördert werden, wird der Schieber 1 in Verschieberichtung 9 (Fig. 11) nach rechts so weit verschoben, dass die in Fig. 11 beiden linken Abstandhalter 8 am linken Rand der Schlitze 14, 15 zur Anlage kommen. Dann sind die beiden Rohrstücke 6, 7 miteinander strömungsverbunden, so dass das zugeführte Gut über das Rohrstück 6 und die daran angeschlossene Förderleitung gefördert wird.

Da der Schieber 1 mit dem druckdicht mit ihm verbundenen Rohrstück 7 versehen ist, reichen zur Abdichtung die Dichtringe27' aus. Ihre Funktion entspricht der Ausführungsform gemäß den Fig. 6 bis 10. Der bei der Druckförderung in dem jeweiligen Rohrstück 6, 6' entstehende Druck gelangt in den die Positionierringe 29' aufnehmenden Aufnahmeraum 38', wodurch der Dichtring 27' fest gegen den Schieber 1 und die Innenwand der Stützringe 40 gepresst wird.

Bei dem beschriebenen Ausführungsbeispiel wird das zu fördernde Gut jeweils über die an das Rohrstück 7 angeschlossene Leitung zugeführt. Es ist aber auch möglich, dass das zu fördernde Gut über eines der Rohrstücke 6, 6' bzw. die daran angeschlossene Leitung zugeführt wird. In diesem Falle wird das Fördergut über die an das Rohrstück 7 des Schiebers 1 angeschlossene Leitung zum jeweiligen Empfänger gefördert, der beispielsweise eine Verarbeitungsmaschine sein kann.

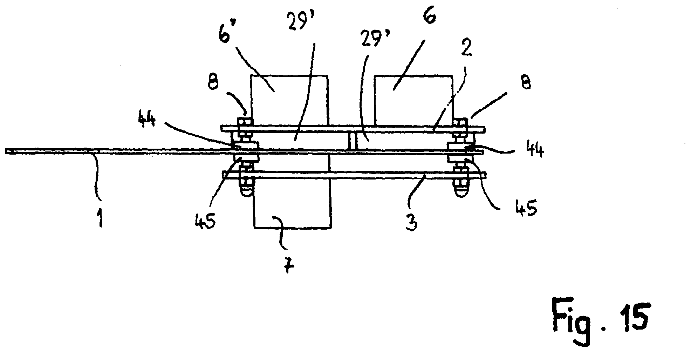

Wie aus Fig. 15 hervorgeht, ist die Halteplatte 3 für die Funktion des Schieberventils nicht zwingend erforderlich. Der Schieber 1 wird zwischen jeweils zwei Muttern 44, 45 geführt, die auf die Schraube der Abstandhalter 8 geschraubt sind. In diesem Fall schlägt der Schieber 1 mit den Enden seiner Schlitze 14, 15 in der jeweiligen Endstellung an den Schrauben der Abstandhalter 8 an.

Die Verwendung der Halteplatte 3 hat allerdings den Vorteil, dass durch sie das gesamte Schieberventil eine höhere Stabilität und Festigkeit hat.

Das Schieberventil kann aber auch dazu benutzt werden, das Auslassende von Behältern freizugeben oder um die Behälter druckdicht zu verschließen.

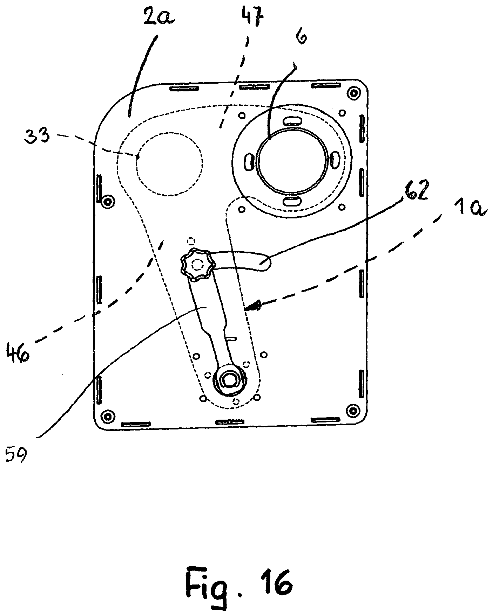

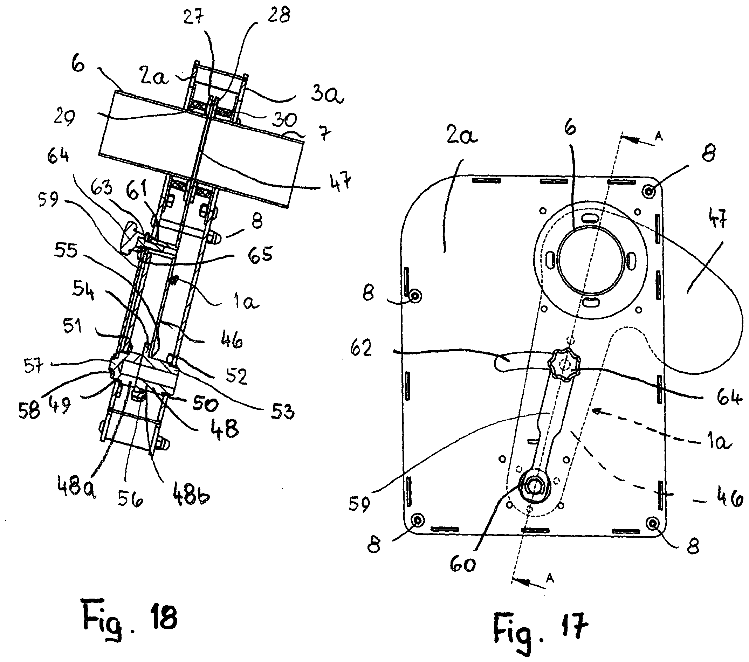

Die Fig. 16 bis 18 zeigen eine weitere Ausführungsform eines Schieberventils. Der Schieber 1a ist bei dieser Ausführungsform nicht verschiebbar, sondern verschwenkbar zwischen den beiden Halteplatten 2a, 3a gelagert. Fig. 16 zeigt den Schieber 1a in der Schließstellung und Fig. 17 in der Freigabestellung. Der Schieber 1a hat etwa L-Form mit einem langen Schenkel 46 und einem kurzen Schenkel 47. Nahe dem freien Ende des längeren Schenkels 46 ist der Schieber 1a auf einer Achse 48 befestigt, die sich senkrecht zu den beiden Halteplatten 2a, 3a erstreckt und drehbar in Öffnungen 49, 50 der beiden Halteplatten 2a, 3a gelagert ist.

Wie aus Fig. 18 hervorgeht, weist die Achse 48 zwei fluchtend zueinander liegende Achsenteile 48a, 48b auf, die durch die Öffnungen 49, 50 geringfügig ragen. Der Achsenteil 48a ist durch einen Sicherungsring 51 gegen Axialverschieben gesichert. Der Sicherungsring 51 liegt an der der Halteplatte 3a zugewandten Innenseite der Halteplatte 2a an. Im Bereich zwischen den beiden Halteplatten 2a, 3a sind die beiden Achsenteile 48a, 48b drehfest miteinander verbunden.

Der Achsenteil 48b liegt mit einer radialen Ringschulter 52 an der der Halteplatte 2a zugewandten Innenseite der Halteplatte 3a an und ragt mit einem im Außendurchmesser verjüngten Endabschnitt 53 geringfügig durch die Öffnung nach außen.

Das dem Achsenteil 48a zugewandte Ende des Achsenteiles 48b weist einen radial nach außen verlaufenden Ringflansch 54 auf, der vorteilhaft einstückig mit dem Achsenteil 48b ausgebildet ist. An der von der Halteplatte 2a abgewandten Seite des Ringflansches 54 liegt der Schenkel 46 des Schiebers 1a flächig an. Der Schenkel 46 ist hierzu mit einer entsprechenden Öffnung 55 versehen, durch welche der Achsenteil 48b ragt. Der Schenkel 46 des Schiebers 1a ist lösbar am Ringflansch 54 befestigt. Im Ausführungsbeispiel ist der Schenkel 46 mit Schrauben 56 am Ringflansch 54 gehalten. Vorteilhaft sind über den Umfang der Öffnung 55 mehrere Schrauben 56 vorgesehen.

Das durch die Öffnung 49 in der Halteplatte 2a ragende Ende des Achsenteiles 48a hat ein im Durchmesser verjüngtes Endstück 57, das von einer Ringschulter 58 absteht. An der Ringschulter 58 liegt das eine Ende eines flachen Hebels 59 an, der drehfest auf der Achse 48 bzw. dem Achsenteil 48a sitzt. Der Hebel 59 ist mittels eines Sicherungsringes 60 auf dem Endstück 57 axial gesichert. Der Hebel 59 ist somit zwischen dem Sicherungsring 60 und der Ringschulter 58 gegen Axialverschieben gehalten.

Der Hebel 59 liegt mit geringem Abstand auf der von der Halteplatte 3a abgewandten Außenseite der Halteplatte 2a und ist an diesem Ende fest mit dem Schenkel 46 des Schiebers 1a verbunden. Vom Schenkel 46 steht senkrecht eine Gewindebuchse 61 ab, die durch einen bogenförmigen Schlitz 62 in der Halteplatte 2a ragt. Der Schlitz 62 liegt auf einem Kreisbogen um die Drehachse des Schiebers 1a bzw. seines Schenkels 46. In die Gewindebuchse 61 ragt ein Gewindebolzen 63, der aus der Gewindebuchse 61 vorsteht und einen Drehgriff 64 trägt, mit dem der Gewindebolzen 63 in die Gewindebuchse 61 geschraubt werden kann. Der Drehgriff 64 weist eine stirnseitige Ringfläche 65 auf, mit der er in einer Klemmstellung an der Außenseite der Halteplatte 2a anliegt. Der Durchmesser der Ringfläche 65 des Drehgriffes 64 ist größer als die Breite des Schlitzes 62.

In den beiden Endstellungen des Schiebers 1a (Fig. 16 und 17) ist der Gewindebolzen 63 mittels des Drehgriffes 64 so weit in die Gewindebuchse 61 geschraubt, dass die Ringfläche 65 fest an der Außenseite der Halteplatte 2a anliegt und somit den Schieber 1a in der jeweiligen Endstellung gegenüber den Halteplatten 2a, 3a verklemmt. In der Freigabestellung (Fig. 17) liegt die Gewindebuchse 61 am einen Rand und in der Schließstellung (Fig. 16) am anderen Rand des bogenförmigen Schlitzes 62 an. Zum Verschwenken des Schiebers 1a wird der Drehgriff 64 geringfügig zurückgedreht, wodurch die Klemmung zwischen dem Drehgriff 64 und der Halteplatte 2a aufgehoben wird. Der Schieber 1a lässt sich dann einfach in die jeweilige Stellung verschieben.

Der Hebel 59 erstreckt sich, wie aus den Fig. 16 und 17 hervorgeht, in halber Breite des Schenkels 46 des Schiebers 1a, in Richtung der Schwenkachse des Schiebers gesehen.

Der Schenkel 46 des Schiebers 1a geht bogenförmig in den kurzen Schenkel 47 über. Im Übergangsbereich zwischen den beiden Schenkeln befindet sich die Durchlassöffnung 33, die in der Freigabestellung gemäß Fig. 17 den Durchlass zwischen den beiden Rohrstücken 6, 7 freigibt.

Die beiden Rohrstücke 6, 7 sind von den flachen Dichtringen 27, 28 umgeben, die auf den beiden Seiten des Schiebers 1a aufliegen und in der beschriebenen Weise die Spalte 66, 67 (Fig. 3 und 10) zwischen den Rohrstücken 6, 7 und dem Schieber 1a abdichten. Die beiden Dichtringe 27, 28 sind entsprechend der Ausführungsform gemäß den Fig. 1 bis 5 ausgebildet. Das Fördergut wird entsprechend der Ausführungsform nach den Fig. 1 bis 5 mit Vakuum gefördert, so dass die beiden Dichtringe 27, 28 aufgrund der Druckdifferenz zwischen dem Druck innerhalb der Rohrstücke 6, 7 und dem Umgebungsdruck die Spalte 66, 67 zwischen dem Schieber 1a und den Rohrstücken 6, 7 zuverlässig abdichten.

Der Abstand zwischen den beiden Halteplatten 2a, 3a kann, wie anhand der Fig. 1 bis 5 erläutert worden ist, mittels der Abstandhalter 8 in der beschriebenen Weise so eingestellt werden, dass die Dichtspalte 66, 67 zwischen den Rohrstücken 6, 7 und dem Schieber 1a minimal sind.

Die beiden Dichtringe 27, 28, die in der anhand der Fig. 1 bis 5 beschriebenen Weise dichtend an den Rohrstücken 6, 7 und an den beiden Außenseiten des Schiebers 1a anliegen, werden vorteilhaft durch die beiden Positionierringe 29, 30 so positioniert, dass sie stets am Schieber 1a anliegen. Die beiden Positionierringe 29, 30 umgeben die Rohrstücke mit Abstand. Die beiden Positionierringe 29, 30 sind in Richtung ihrer Achse zwischen den beiden Halteplatten 2a, 3a verschiebegesichert. Dabei sind die Positionierringe 29, 30 so ausgebildet, dass der Außendruck auf die Dichtringe 27, 28 wirken kann. Beispielhaft können die Positionierringe 29, 30 aus luftdurchlässigem Material bestehen, beispielsweise aus geschäumtem Material.

Die beiden Halteplatten 2a, 3a haben in Ansicht jeweils etwa rechteckigen Umriss und liegen deckungsgleich übereinander. Eine der Ecken der Halteplatten 2a, 3a ist mit einem größeren Krümmungsradius abgerundet. Die Rohrstücke 6, 7 befinden sich nahe einem Eckbereich der Halteplatten 2a, 3a. Sie sind so ausgebildet, dass der Schieber 1a in seiner Sperrstellung (Fig. 16) vollständig zwischen den beiden Halteplatten 2a, 3a liegt und nicht über diese vorsteht. In der Freigabestellung hingegen steht der kurze Schenkel 47 des Schiebers 1a über die beiden Halteplatten 2a, 3a vor (Fig. 17). Da die Freigabe- und die Schließstellung des Schiebers 1a durch die Anschlagstellung der Gewindebuchse 61 an den beiden Enden des Schlitzes 62 bestimmt wird, ist eine einfache und dennoch genaue Verstellung des Schiebers in die beiden Endstellungen gewährleistet.

Der kurze Schenkel 47 des Schiebers 1a ist so gestaltet, dass er während des Verschwenkens den Durchlass der beiden Rohrstücke 6, 7 stets verschließt und erst dann freigibt, wenn die Durchlassöffnung 33 in den Bereich der Rohrstücke 6, 7 gelangt.

Der Hebel 59 stellt sicher, dass der Schieber 1a ohne großen Kraftaufwand verschwenkt werden kann.

Das Schieberventil gemäß den Fig. 16 bis 18 kann auch für eine Druckförderung herangezogen werden, wie sie anhand der Fig. 6 bis 10 beschrieben worden ist. In diesem Falle haben die Dichtringe 27, 28 die anhand der Fig. 6 bis 10 beschriebene Querschnittsform.

## Patentansprüche

1. Einrichtung mit wenigstens einer Förderleitung (6, 6', 7) und einem Schieberventil, das wenigstens einen Schieber (1, 1a), mit dem der Förderquerschnitt der Förderleitung (6, 6', 7) verschließbar und der mit wenigstens einer Durchlassöffnung (33) versehen ist, und wenigstens einen Dichtring (27', 28') aufweist, mit dem die Förderleitung (6, 6', 7) gegen den Schieber (1, 1a) abgedichtet ist und der die Förderleitung (6, 6', 7) umgibt,
**dadurch gekennzeichnet, dass** der Dichtring (27', 28') L-förmigen Querschnitt aufweist, dass der eine Schenkel (34, 35) des Dichtringes (27', 28') einen als Ringscheibe ausgebildeten, flächig und dichtend am Schieber (1, 1a) anliegenden Dichtteil bildet, der radialen Abstand von der Förderleitung (6, 6', 7) hat, dass der andere Schenkel (36, 37) des Dichtringes (27', 28') zylindrisch verläuft und mit seiner von der Förderleitung (6, 6',7) abgewandten äußeren Mantelfläche an der Innenseite eines den Dichtring (27', 28') umgebenden Stützringes (40, 41) anliegt, dass der eine Schenkel (34, 35) des Dichtringes (27', 28'), eine mit der Förderleitung (6, 6', 7) dichtfest verbundene Halteplatte (2, 3) und der Stützring (40, 41) in Radialrichtung einen Aufnahmeraum (38, 39) begrenzen, und dass der Aufnahmeraum (28, 39) über einen Spalt (66, 67) mit dem Innenraum der Förderleitung (6,6',7) verbunden ist, wobei der Dichtring (27', 28') aufgrund der Druckdifferenz zwischen dem Druck in der Förderleitung (6, 6', 7) und dem Umgebungsdruck gegen den Schieber (1, 1a) gedrückt wird.

2. Einrichtung nach Anspruch 1,
**dadurch gekennzeichnet, dass** der Schieber (1, 1a) zwischen zwei Halteplatten (2, 3; 2a, 3a) liegt, die jeweils Abstand vom Schieber (1, 1a) haben.

3. Einrichtung nach Anspruch 1 oder 2,
**dadurch gekennzeichnet, dass** an beiden Seiten des Schiebers (1, 1a) jeweils ein Dichtring (27', 28') mit einem ringscheibenförmigen Dichtteil anliegt.

4. Einrichtung nach Anspruch 2 oder 3,
**dadurch gekennzeichnet, dass** die beiden Halteplatten (2, 3) durch Abstandhalter (8) auf Abstand zueinander gehalten sind, die in Verschieberichtung (9) des Schiebers (1) sich erstreckende Schlitze (14, 15) des Schiebers (1) durchsetzen.

5. Einrichtung nach einem der Ansprüche 2 bis 4,
**dadurch gekennzeichnet, dass** zumindest die eine Halteplatte, vorzugsweise beide Halteplatten (2, 3; 2a, 2a), mindestens ein Rohrstück (6, 6', 7) aufweisen, das Teil der Förderleitung ist und durch eine Öffnung (4, 5) der Halteplatte (2, 3; 2a, 3a) ragt.

6. Einrichtung nach einem der Ansprüche 1 bis 5,
**dadurch gekennzeichnet, dass** der Dichtring (27', 28') durch wenigstens einen Positionierring (29', 30') in seiner Einbaulage gehalten ist.

7. Einrichtung nach Anspruch 6,
**dadurch gekennzeichnet, dass** der Positionierring (29', 30') kreisförmigen Querschnitt hat.

8. Einrichtung nach einem der Ansprüche 1 bis 7,
**dadurch gekennzeichnet, dass** im Aufnahmeraum (38, 39) des Dichtringes (27', 28') ein Positionierring (29', 30') untergebracht ist.

9. Einrichtung nach Anspruch 8,
**dadurch gekennzeichnet, dass** der Positionierring (29', 30') für das Druckmedium durchlässig ist.

10. Einrichtung nach Anspruch 8 oder 9,
**dadurch gekennzeichnet, dass** der Positionierring (29', 30') wenigstens einen Durchlass (42), vorzugsweise mehrere über den Umfang verteilt angeordnete Durchlässe aufweist.

11. Einrichtung nach einem der Ansprüche 1 bis 10,
**dadurch gekennzeichnet, dass** die eine Halteplatte (2) wenigstens zwei, in Verschieberichtung (9) des Schiebers (1) mit Abstand hintereinanderliegende Rohrstücke (6, 6') und der Schieber (1) ein Rohrstück (7) aufweist, das durch Verschieben des Schiebers (1) wahlweise mit einem der Rohrstücke (6, 6') der Halteplatte (2) verbindbar ist.

12. Einrichtung nach einem der Ansprüche 1 bis 11,
**dadurch gekennzeichnet, dass** der Schieber (1a) zwischen den beiden Halteplatten (2a, 3a) schwenkbar gelagert ist.

13. Einrichtung nach Anspruch 12,
**dadurch gekennzeichnet, dass** der Schieber (1a) etwa L-förmig ausgebildet ist.

14. Einrichtung nach Anspruch 13,
**dadurch gekennzeichnet, dass** der Schieber (1a) mit seinem längeren Schenkel (46) schwenkbar gelagert ist.

15. Einrichtung nach einem der Ansprüche 12 bis 14,
**dadurch gekennzeichnet, dass** der Schieber (1a) mit mindestens einem Betätigungsteil (59, 61, 63, 64) verschwenkbar ist.

16. Einrichtung nach Anspruch 15,
**dadurch gekennzeichnet, dass** das Betätigungsteil (59 61, 63, 64) durch einen zumindest in der einen Halteplatte (2a, 3a) vorgesehenen Schlitz (62) ragt, der um die Schwenkachse (48) des Schiebers (1a) gekrümmt verläuft.

17. Einrichtung nach Anspruch 15 oder 16,
**dadurch gekennzeichnet, dass** das Betätigungsteil (59, 61, 63, 64) ein Klemmelement (64), vorzugsweise einen Drehgriff, aufweist, mit dem das Betätigungsteil (59, 61, 63) in der jeweiligen Einstelllage des Schiebers (1a) an zumindest der einen Halteplatte (2a, 3a) verklemmbar ist.

## Claims

1. A device with at least one conveying pipe (6, 6', 7) and a slide valve that comprises at least one slide (1, 1a), by means of which the conveying cross section of the conveying pipe (6, 6', 7) can be closed and which is provided with at least one through-hole (33), and at least one sealing ring (27', 28'), by means of which the conveying pipe (6, 6', 7) is sealed relative to the slide (1, 1a) and which surrounds the conveying pipe (6, 6', 7),
**characterized in that** the sealing ring (27', 28') has an L-shaped cross section, **in that** the one leg (34, 35) of the sealing ring (27', 28') forms a sealing portion, which is realized in the form of a washer, flatly rests against the slide (1, 1a) in a sealing manner and is radially spaced apart from the conveying pipe (6, 6', 7), **in that** the other leg (36, 37) of the sealing ring (27', 28') extends cylindrically and rests against the inner side of a supporting ring (40, 41) surrounding the sealing ring (27', 28') with its outer lateral surface that faces away from the conveying pipe (6, 6', 7), **in that** the one leg (34, 35) of the sealing ring (27', 28') delimits a retaining plate (2, 3), which is connected to the conveying pipe (6, 6', 7) in a tightly sealed manner, and the supporting ring (40, 41) radially delimits a receiving space (38, 39), and **in that** the receiving space (28, 39) is connected to the interior of the conveying pipe (6, 6', 7) by means of a gap (66, 67), herein the sealing ring (27', 28') is pressed against the slide (1, 1a) as a result of the pressure difference between the pressure in the conveying pipe (6, 6', 7) and the ambient pressure.

2. The device according to claim 1,
**characterized in that** the slide (1, 1a) lies between two retaining plates (2, 3; 2a, 3a), which are respectively spaced apart from the slide (1, 1a).

3. The device according to claim 1 or 2,
**characterized in that** a sealing ring (27', 28') with a washer-shaped sealing portion respectively rests against both sides of the slide (1, 1a).

4. The device according to claim 2 or 3,
**characterized in that** the two retaining plates (2, 3) are held at a distance from one another by means of spacers (8), which pass through slots (14, 15) of the slide (1) that extend in the shifting direction (9) of the slide (1).

5. The device according to one of claims 2 to 4,
**characterized in that** at least one retaining plate, preferably both retaining plates (2, 3; 2a, 2a), have at least one pipe section (6, 6', 7), which forms part of the conveying pipe and protrudes through an opening (4, 5) of the retaining plate (2, 3; 2a, 3a).

6. The device according to one of claims 1 to 5,
**characterized in that** the sealing ring (27', 28') is held in its installation position by at least one positioning ring (29', 30').

7. The device according to claim 6,
**characterized in that** the positioning ring (29', 30') has a circular cross section.

8. The device according to one of claims 1 to 7,
**characterized in that** a positioning ring (29', 30') is accommodated in the receiving space (38, 39) of the sealing ring (27', 28').

9. The device according to claim 8,
**characterized in that** the positioning ring (29', 30') is permeable to the pressure medium.

10. The device according to claim 8 or 9,
**characterized in that** the positioning ring (29', 30') has at least one passage (42), preferably multiple passages distributed over the circumference.

11. The device according to one of claims 1 to 10,
**characterized in that** the one retaining plate (2) has at least two pipe sections (6, 6'), which are arranged behind one another and spaced apart from one another in the shifting direction (9) of the slide (1), and **in that** the slide (1) has a pipe section (7), which can be selectively connected to one of the pipe sections (6, 6') of the retaining plate (2) by shifting the slide (1).

12. The device according to one of claims 1 to 11,
**characterized in that** the slide (1a) is pivotably mounted between the two retaining plates (2a, 3a).

13. The device according to claim 12,
**characterized in that** the slide (1a) is designed in an approximately L-shaped manner.

14. The device according to claim 13,
**characterized in that** the slide (1a) is pivotably mounted with its longer leg (46).

15. The device according to one of claims 12 to 14,
**characterized in that** the slide (1a) can be pivoted with at least one actuating part (59, 61, 63, 64).

16. The device according to claim 15,
**characterized in that** the actuating part (59, 61, 63, 64) protrudes through a slot (62), which is provided at least in the one retaining plate (2a, 3a) and extends around the pivoting axis (48) of the slide (1a) in a curved manner.

17. The device according to claim 15 or 16,
**characterized in that** the actuating part (59, 61, 63, 64) has a clamping element (64), preferably a turning handle, by means of which the actuating part (59, 61, 63) can be clamped on at least the one retaining plate (2a, 3a) in the respectively adjusted position of the slide (1a).

## Revendications

1. Dispositif, pourvu d'au moins un conduit de transport (6, 6', 7) et d'une soupape à tiroir, qui est munie d'au moins un tiroir (1, 1a), permettant de fermer la section transversale de transport du conduit de transport (6, 6', 7) et qui est munie d'au moins un orifice de passage (33), et qui comporte au moins une bague d'étanchéité (27', 28') qui assure l'étanchéité du conduit de transport (6, 6', 7) par rapport au tiroir (1, 1a) et qui entoure le conduit de transport (6, 6', 7),
**caractérisé en ce que** la bague d'étanchéité (27', 28') comporte une section transversale en forme de L, **en ce que** l'une branche (34, 35) de la bague d'étanchéité (27', 28') forme une pièce d'étanchéité conçue sous la forme d'une rondelle annulaire, adjacente à plat et de manière à assurer l'étanchéité au tiroir (1, 1a), qui présente un écart radial par rapport au conduit de transport (6, 6', 7), **en ce que** l'autre branche (36, 37) de la bague d'étanchéité (27', 28') s'écoule sous forme cylindrique et par sa surface d'enveloppe extérieure opposée au conduit de transport (6, 6',7) est adjacente à la face intérieure d'une bague d'appui (40, 41) entourant la bague d'étanchéité (27', 28'), **en ce que** l'une branche (34, 35) de la bague d'étanchéité (27', 28'), une plaque de retenue (2, 3) assemblée de manière étanche avec le conduit de transport (6, 6', 7) et la bague d'appui (40, 41) délimitent en direction radiale un espace de logement (38, 39), et **en ce que** l'espace de logement (28, 39) est assemblé par l'intermédiaire d'une fente (66, 67) avec l'espace intérieur du conduit de transport (6, 6',7), la bague d'étanchéité (27', 28') étant pressée du fait de la pression différentielle entre la pression dans le conduit de transport (6, 6', 7) et la pression ambiante contre la glissière (1, 1a).

2. Dispositif selon la revendication 1,
**caractérisé en ce que** le tiroir (1, 1a) se situe entre deux plaques de retenue (2, 3; 2a, 3a), qui présentent chacune un écart par rapport au tiroir (1, 1a).

3. Dispositif selon la revendication 1 ou 2,
**caractérisé en ce que** sur les deux côtés du tiroir (1, 1a), une bague d'étanchéité (27', 28') est respectivement adjacente par une pièce d'étanchéité en forme de rondelle annulaire.

4. Dispositif selon la revendication 2 ou 3,
**caractérisé en ce que** les deux plaques de retenue (2, 3) sont maintenues avec un écart l'une par rapport à l'autre par des entretoises (8) qui traversent des fentes (14, 15) du tiroir (1) s'étendant dans la direction de déplacement (9) du tiroir {1).

5. Dispositif selon l'une quelconque des revendications 2 à 4,
**caractérisé en ce qu'**au moins l'une plaque de retenue, de préférence les deux plaques de retenue {2, 3 ; 2a, 2a) comportent au moins une pièce tubulaire (6, 6', 7), qui fait partie du conduit de transport et qui saillit à travers un orifice (4, 5) de la plaque de retenue (2, 3 ; 2a, 3a).

6. Dispositif selon l'une quelconque des revendications 1 à 5,
**caractérisé en ce que** la bague d'étanchéité (27', 28') est maintenue dans sa position de montage par au moins une bague de positionnement (29', 30').

7. Dispositif selon la revendication 6,
**caractérisé en ce que** la bague de positionnement (29'. 30') possède une section transversale de forme circulaire.

8. Dispositif selon l'une quelconque des revendications 1 à 7,
**caractérisé en ce que** dans l'espace de logement (38, 39) de la bague d'étanchéité (27', 28') est logée une bague de positionnement (29', 30').

9. Dispositif selon la revendication 8,
**caractérisé en ce que** la bague de positionnement (29', 30') est perméable au fluide sous pression.

10. Dispositif selon la revendication 8 ou 9,
**caractérisé en ce que** la bague de positionnement (29', 30') comporte au moins un passage (42), de préférence plusieurs passages placés en distribution sur la périphérie.

11. Dispositif selon l'une quelconque des revendications 1 à 10,
**caractérisé en ce que** la plaque de retenue (2) comporte au moins deux pièces tubulaires (6, 6') placées l'une derrière l'autre avec un écart dans la direction de déplacement (9) du tiroir (1) et **en ce que** le tiroir (1) comporte une pièce tubulaire (7), qui par déplacement du tiroir (1) est susceptible d'être assemblée sélectivement avec l'une des pièces tubulaires (6, 6') de la plaque de retenue (2).

12. Dispositif selon l'une quelconque des revendications 1 à 11,
**caractérisé en ce que** le tiroir (1a) est logé de manière pivotante entre les deux plaques de retenue (2a, 3a).

13. Dispositif selon la revendication 12,
**caractérisé en ce que** le tiroir (1a) est conçu approximativement en forme de L.

14. Dispositif selon la revendication 13,
**caractérisé en ce que** le tiroir (1a) est logé de manière pivotante par sa branche (46) la plus longue.

15. Dispositif selon l'une quelconque des revendications 12 à 14,
**caractérisé en ce que** le tiroir (1a) est susceptible de pivoter à l'aide d'au moins une pièce d'actionnement (59, 61, 63, 64).

16. Dispositif selon la revendication 15,
**caractérisé en ce que** la pièce d'actionnement (59, 61, 63, 64) saillit à travers une fente (62) prévue au moins dans l'une plaque de retenue (2a, 3a), qui s'écoule sous forme curviligne autour de l'axe de pivotement (48) du tiroir (1a).

17. Dispositif selon la revendication 15 ou 16,
**caractérisé en ce que** la pièce d'actionnement (59, 61, 63, 64) comporte un élément de serrage (64), de préférence une poignée rotative, à l'aide de laquelle la pièce d'actionnement (59, 61, 63) est susceptible d'être serrée dans la position de réglage respective du tiroir (1a) sur au moins l'une plaque de retenue (2a, 3a).
